Europäisches Patentamt

European Patent Office

Office européen des brevets

(19)

(11) Veröffentlichungsnummer: **0 302 849 B1**

(12) **EUROPÄISCHE PATENTSCHRIFT**

(45) Veröffentlichungstag der Patentschrift :
02.10.91 Patentblatt 91/40

(51) Int. Cl.⁵: **F23C 11/02, B01J 8/38,**
**// F23G5/30**

(21) Anmeldenummer : 88890180.8

(22) Anmeldetag : 07.07.88

(54) **Verfahren und Vorrichtung zur Verbrennung oder Vergasung von Brennstoffen in einer Wirbelschicht.**

(30) Priorität : 21.07.87 AT 1849/87

(43) Veröffentlichungstag der Anmeldung :
08.02.89 Patentblatt 89/06

(45) Bekanntmachung des Hinweises auf die
Patenterteilung :
02.10.91 Patentblatt 91/40

(84) Benannte Vertragsstaaten :
AT BE CH DE FR GB IT LI LU NL SE

(56) Entgegenhaltungen :
EP-A- 0 117 634
DE-A- 2 710 522
DE-A- 3 001 692
GB-A- 2 121 311
PATENT ABSTRACTS OF JAPAN, Band 4, Nr.
169, (M-43)[651], 21. November 1980; & JP-
A-55 118 515 (EBARA SEISAKUSHO K.K.) 11-
09-1980

(73) Patentinhaber : SGP-VA Energie- und
Umwelttechnik Gesellschaft m.b.H.
Siemensstrasse 89
A-1210 Wien (AT)

(72) Erfinder : Steinrück, Peter, Dipl.-Ing. Dr.
Breitenseerstrasse 51/115
A-1140 Wien (AT)
Erfinder : Ganster, Gerhard, Dipl.-Ing.
Had. Hauptstrasse 136/2/2
A-1147 Wien (AT)

(74) Vertreter : Collin, Hans, Dipl.-Ing. Dr. et al
Patentanwälte Dipl.-Ing. Dr. Hans Collin
Dipl.-Ing. Erwin Buresch Dipl.-Ing.Armin Häupl
Mariahilferstrasse 50
A-1070 Wien (AT)

## Beschreibung

Die Erfindung betrifft ein Wirbelschichtverfahren zur Vergasung und Verbrennung von Brennstoffen in getrennten und unterschiedlich fluidisierten Zonen, umfassend :

Aufgeben des Brennstoffs in eine Trocknungs- und Pyrolysezone mit verhältnismäßig schwächerer Fluidisierung, in der die Feststoffe nach unten transportiert werden ;

Fördern der genannten Feststoffe von einem unteren Bereich der genannten Trocknungs- und Pyrolysezone zu einem unteren Bereich einer Verbrennungszone mit verhältnismäßig stärkerer Fluidisierung, in der die Feststoffe nach oben transportiert werden :

Betreiben der Verbrennungszone als schnelle oder turbulente Wirbelschicht ;

Fördern der genannten Feststoffe nach oben in der genannten Verbrennungszone über die Höhe eines Bettes in der genannten Trocknungs- und Pyrolysezone hinaus ;

Umwälzen und Zwangsumlenken der genannten Feststoffe vom oberen Bereich der genannten Verbrennungszone nach unten auf das genannte Bett in der genannten Trocknungs- und Pyrolysezone zu als Regen von Feststoffteilchen ;

direktes Eindosieren des Brennstoffs in den genannten Teilchenregen ;

Leiten von Gasen, die aus der genannten Verbrennungszone austreten, als Strömungsimpuls in eine Turbulenzzone, in der eine Nachverbrennung durchgeführt wird ; und

Einstellen der Temperatur in der genannten Nachverbrennungs-Turbulenzzone durch Steuerung der Verteilung der gesamten Menge an Fluidisierungsgas über die genannte verbrennungszone und die genannte Trocknungs- und Pyrolysezone.

Die Temperatur in der Nachverbrennungszone kann dabei alternativ oder zusätzlich auch durch Zugabe eines Sauerstoffträgers im Bereich des Feststoffteilchenregens gesteuert werden.

Ein Wirbelschichtverfahren zur Vergasung und Verbrennung von Brennstoffen in getrennten und unterschiedlich fluidisierten Zonen und eine Vorrichtung zu seiner Durchführung sind z.B. aus der EP-A 202215 bekannt. Dort erfolgt eine vertikale Bettzirkulation um eine Trennwand infolge unterschiedlicher Fluidisierung, wobei das Brennmaterial zu der infolge der geringeren Fluidisierung abwärts gerichteten Bettströmung zudosiert wird. Es ist angegeben, daß die Beschickung unterhalb oder oberhalb der Bettoberfläche erfolgen kann; als Beschickungseinrichtung sind u.a. Fallschurren genannt. Weiterhin ist angegeben, daß die Bereiche der Brennstoffaufgabe mit unterstöchiometrischem Sauerstoffangebot betrieben werden können, so daß die Verbrennung abgestuft durchgeführt werden kann. Mit anderen Worten tritt in der langsamen Wirbelschicht vorwiegend Trocknung und Pyrolyse ein.

Bei diesem Verfahren sind die unterschiedlich fluidisierten Zonen innere Zonen einer einzigen Wirbelschicht, in der ein Innenkreislauf bei gleichbleibender Betthöhe über den Querschnitt der Wirbelschicht erfolgt. Die Trennung zwischen den Zonen erfolgt mittels einer Trennwand, deren Oberkante weit unterhalb des Bettniveaus endet. Dieses Verfahren erlaubt nur eine langsame Bettmaterialbewegung, die nicht für eine gleichmäßige Brennstoffverteilung im Bett innerhalb einer annehmbaren Zeit ausreicht, also insbesondere bei rasch entgasenden Brennstoffen keine gleichmäßige Querschnittsbeladung zuläßt. Weiterhin erlaubt die bekannte Konstruktion nur einen Gasaustritt über die allen Zonen gemeinsame Bettoberfläche, so daß einerseits eine gezielte Einflußnahme auf eine ausgewählte Zone im Wirbelbett nicht möglich ist und überdies oberhalb der Bettoberfläche über den Bettquerschnitt ungleiche Verhältnisse herrschen, so daß Gassträhnen unterschiedlicher Zusammensetzung auftreten.

Beim erfindungsgemäßen Verfahren wird die Wirbelschicht so ausgebildet, daß zwar die untere Verbindung zwischen den unterschiedlich fluidisierten Zonen gleich bleibt, die stärker fluidisierte Verbrennungszone aber als turbulente oder rasche Wirbelzone betrieben wird, so daß der Feststoffstrom in dieser Zone wesentlich über das Bettniveau der schwächer fluidisierten Trocknungs- und Pyrolysezone hinaus nach oben getragen und dann so zwangsumgelenkt wird, daß ein Teilchenregen auf die Bettoberfläche in der Trocknungs- und Pyrolysezone niederfällt, in den der Brennstoff eindosiert und durch den der Brennstoff in das Bettmaterial eingemischt wird, während die aus der Verbrennungszone austretenden Gase nach ihrer Trennung von den Feststoffen wiederum umgelenkt werden, so daß eine turbulente Nachverbrennungszone entsteht, in der vorzugsweise auch die aus der schwächer fluidisierten Trocknungs- und Pyrolysezone nach oben austretenden Gase verbrannt werden.

Ein ähnliches Verfahren mit Vorrichtung ist in der DE-OS 2310522 beschrieben, wobei die Feststoffaufgabe neben dem Teilchenregen parallel zu diesem erfolgt. Erfindungsgemäß wird jedoch in den Teilchenregen hinein aufgegeben, wobei vorzugsweise die Aufgaberichtung im Winkel zur Fallrichtung steht. Weiterhin ist gemäß dieser Druckschrift eine turbulente Nachverbrennungszone nicht vorgesehen.

Vorzugsweise wird das erfindungsgemäße Verfahren so betrieben, daß die Höhe der Verbrennungszone das 2- bis 20-fache der Höhe der Trocknungs- und Pyrolysezone beträgt.

Dabei kann so vorgegangen werden, daß die die Trocknungs- und Pyrolysezone verlassenden Gase vor ihrer Mischung mit die Verbrennungszone verlassenden Gasen abgezogen werden.

Wie angegeben, wird die Verbrennungszone als schnelle oder turbulente Wirbelschicht gefahren. Der Ausdruck "schnelle" ist ein Fachausdruck auf dem Wirbelschichtsektor und sehr häufig wird auch alternativ der Ausdruck "turbulent" verwendet. Wird eine Wirbelschicht in üblicher Weise "langsam" gefahren, so stellt sie eine mehr oder weniger dichte Zone mit einer Oberfläche dar, die zwar durch austretende Gasblasen (bubbling) fluktuiert, sonst aber gut definiert ist. Beim Erhöhen des Gasdurchsatzes zur "schnellen" Fahrweise läßt sich diese Oberfläche nicht mehr definieren und man nimmt an, daß im "schnellen" Zustand der Wirbelschicht Strähnen oder Cluster höherer Feststoffkonzentration in einem Kontinuum mit geringer Feststoffkonzentration vorliegen, wobei diese Strähnen in der Wirbelschicht in eine weniger dichte Zone angehoben werden und anschließend wieder in eine dichtere Zone zurückfallen und sich ein entsprechendes dynamisches Gleichgewicht einstellt. Als Literatur hiezu wird angegeben :

D.Geldart & M.J.Rhodes, From Minimum Fluidization to Pneumatic Transport
— A Critical Review of the Hydrodynamics
M.Kwauk, W.Ningde u.a., Fast Fliudization at ICM
beide : Circulating Fluidized Bed Technology, P.Basu Pergamon Press, Halifax 1985
J.M.Matsen, The Rise and Fall of Recurrent Particles : Hydrodynamics and Circulation
M.Horio u.a., Solid Distribution and Movement in Circulating Fluidized
Beds, 2nd Int.Conf.on Circulating Fluidized Beds, März 1988, Compiegne
L.Stromberg, Operational Modes for Fluidized Beds, Studsvik AG, Schweden 1979

Beim erfindungsgemäßen Verfahren wird vorteilhaft die langsamere Wirbelschicht in der Trocknungs- und Pyrolysezone in der Nähe ihres Lockerungspunktes, vorzugsweise mit einer Fluidisierungszahl im Bereich von 1 bis 5, vorzugsweise 1 bis 2, gefahren. Die Fluidisierungszahl ist das Vielfache der sogenannten Lockerungsgeschwindigkeit nach Ergun (Chemical Engineering Progress 48 (1952) S. 89/94).

Die Wirbelschicht in der Verbrennungszone wird insbesondere mit einer Fluidisierungszahl im Bereich von 10 bis 140, insbesondere von 20 bis 140, bevorzugt von 70 bis 140, gefahren. Der Übergang von langsam in schnell erfolgt etwa bei einer Fluidisierungszahl von 10 bis 15 in Abhängigkeit von u.a. der Korngrößenverteilung im Bett. In besonderen Fällen kann der Übergang bereits bei Fluidisierungszahlen von etwa 4 beginnen.

Weiterhin ist bevorzugt, daß 60 bis 95% des Fluidisierungsgasvolumens in die Verbrennungszone eingeblasen werden.

Das erfindungsgemäße Verfahren wird weiterhin günstig so geführt, daß 20 bis 200 kg $m^{-2}sec^{-1}$, bezogen auf den Querschnitt der Verbrennungszone, Feststoffe als Teilchenregen aus der Verbrennungszone rückgeführt werden.

Die aus der Verbrennungszone austretenden Gase werden, nach vorheriger Zwangsumlenkung zusammen mit den von ihnen mitgeführten Feststoffen, vorteilhaft in bekannter Weise in im wesentlichen Horizontalrichtung rückumgelenkt, wobei die Gase mit hoher Geschwindigkeit, vorzugsweise mit 10 bis 30 m $sec^{-1}$, in den unteren Bereich der Nachverbrennungsturbulenzzone gerichtet werden.

In der Nachverbrennungsturbulenzzone, wo in jedem Fall Feststoffeinteilchen und vorteilhaft auch das aus der Trocknungs- und Pyrolysezone austretende brennbare Gas, insbesondere auch nach weiterem Zusatz eines Sauerstoffträgergases im Bereich des Teilchenregens vollständig ausgebrannt werden, wird vorteilhaft eine mittlere Verweilzeit von 0,1 bis 2 sec eingestellt ; darüber liegende Verweilzeiten sind möglich, werden aber nicht bevorzugt.

Beim erfindungsgemäßen Verfahren können gasförmige, flüssige, pastöse oder feste Brennstoffe, insbesondere verschiedenste Abfallstoffe wie Hausmüll, Brennstoff aus Müll, Klärschlamm und Rejekten aus der Papierindustrie oder Altölen verarbeitet werden.

Umlenkeinrichtungen trennen das aus der schnellen Wirbelschicht austretende Gas-Feststoff-Gemisch in eine nahezu teilchenfreie Gasströmung und in einen nach unten gerichteten Feststoffstrom, der in Form eines Teilchenregens auf die Oberfläche der langsamen Wirbelschicht im ersten Bereich niederfällt.

Dieser Teilchenregen wird genutzt, um den aufgegebenen Brennstoff in die Wirbelschicht einzumischen und das Aufsteigen von Brennstoffteilchen zu verhindern. In der Aufgabezone erfolgt durch den für Wirbelschichten charakteristischen hohen Wärmeübergang eine rasche Trocknung und Entgasung bei Temperaturen im Bereich von etwa 500 bis etwa 1000°C (bevorzugt von 650 bis 900°C).

Mit der durch die unterschiedliche Fluidisierung hervorgerufenen, nach unten gerichteten Bettmaterialbewegung gelangt der Brennstoff schließlich in den zweiten Bereich, wo eine Verbrennung mit Sauerstoffüberschuß stattfindet.

Es ist möglich, das gesamte Bettmaterial in einem Zeitraum zwischen etwa 10 und 120 Sekunden einmal vollständig umzuwälzen. Die mit den Bettmaterialteilchen aus dem schnell fluidisierten Bereich transportierte Wärme reicht vollständig aus, um die im Bereich der Brennstoffaufgabezone stattfindenden Trocknungs- und

3

Vergasungsreaktion in Gang zu halten. Dieser Effekt ermöglicht es erstmals, auch Brennstoffe mit hohem Gehalt an flüchtigen Bestandteilen, wie etwa Hausmüll oder Klärschlamm selbst bei geringerem Heizwert, wie etwa 5.0 MJ/kg, autotherm, das heißt ohne Verwendung eines Zusatzbrennstoffes oder ohne Luftvorwärmung, in einer Wirbelschicht zu verbrennen. Bei Brennstoffen mit höheren Heizwerten wird ein Teil der Wärme vorteilhaft über im Wirbelbett befindliche Wandheizflächen abgeführt.

Die aus der Zone mit hoher Fluidisierungsgeschwindigkeit austretenden Verbrennungsgase, die meist noch freien Sauerstoff enthalten, treffen vorzugsweise über dem ersten Bereich mit den dort aufsteigenden Pyrolysegasen zusammen und werden mit diesen zufolge hoher Geschwindigkeit und damit verbundener starker Turbulenz innig vermischt. In diesem Bereich werden die aus der ersten Zone austretenden Entgasungsprodukte vollständig innerhalb einer mittleren Verweilzeit von z.B. 0,1-2,0 sec verbrannt. Menge und Energieinhalt der Pyrolysegase sind von den Brennstoffeigenschaften, besonders vom Gehalt an flüchtigen Bestandteilen, aber auch von der Aufteilung der Verbrennungsluft auf die beiden Bereiche, abhängig. Die in dieser Nachbrennzone durch das Ausreagieren der Entgasungsprodukte frei werdende Energiemenge kann in Abängigkeit vom Brennstoff auf z.B. zwischen 5 und 50% der gesamten, durch den Brennstoff eingebrachten Energiemenge eingestellt werden. Dies kann u.a. dazu benutzt werden, die Temperatur in der Nachbrennzone auf die zur thermischen Entsorgung von Sonderabfällen in bestimmten Ländern gesetzlich geforderte Temperatur von über 1200°C zu erhöhen.

Ist eine solch hohe Temperatur nicht erforderlich, ist es vorteilhaft, die Rauchgase in dieser Durchmischungszone auf 800-900°C zu halten, um die thermische Bildung von NOx zu unterdrücken und gleichzeitig vollständigen Ausbrand zu gewährleisten. Dies kann einerseits durch Anbringen von Strahlungsheizflächen, anderseits auch durch entsprechende Einstellung der Verbrennungsluftverteilung erreicht werden.

Das erfindungsgemäße Verfahren leitet seine substantiellen Verbesserungen von Erfahrungen mit den bekannten Wirbelschichttechnologien ab und hebt sich u.a. durch eine neue Ausformung der Nachbrennzone von den bekannten Wirbelschichtverbrennungstechnologien ab.

Allen Wirbelschichttypen ist die hohe Brennstofffflexibilität gemeinsam. Problematisch hingegen ist, daß im allgemeinen hohe Anforderungen an die Brennstoffaufbereitung zu stellen sind. Wird der Brennstoff wie bei stationären Wirbelschichtanlagen üblich, von oben auf das Wirbelbett geworfen, so muß der Brennstoff ein gewisses Kornspektrum aufweisen, um gleichmäßige Brennstoffverteilung sicherzustellen. Bei dieser Beschickungsmethode werden Feinanteile oder Leichtstoffe von den Rauchgasen mitgerissen und somit nicht in die Wirbelschicht eingemischt. Da sich die Wirbelschicht ähnlich wie eine Flüssigkeit verhält, laufen spezifisch leichte Brennstoffe Gefahr, auf der Wirbelschicht aufzuschwimmen.

Diesen Nachteilen kann bei Beschickung des Brennstoffes direkt in das Wirbelbett begegnet werden. Dazu muß aber der Brennstoff gegen den Bettdruck gefördert werden. Die Betriebssicherheit der hierzu nötigen Abdichtorgane erfordert eine sorgfältige Aufbereitung des Brennstoffs, weiters kann eine ausreichende Verteilung des Brennstoffs in der Wirbelschicht auf diese Weise nicht sichergestellt werden.

Ein direktes Einbringen des Brennstoffes in den unteren Bereich einer schnellen Wirbelschicht ist praktisch nur bei entgasten hochwertigen Brennstoffen möglich, z.B. Kokspulver gemäß der DE-OS 2736493.

Ein weiterer Problemkreis liegt in der gleichmäßigen Verteilung des Brennstoffs und der Additive zur Schadstoffeinbindung. Gleichmäßige Verteilung ist die Voraussetzung für optimale Verbrennung und Emissionsminderung. Bei punktueller Aufgabe des Brennstoffes reicht im allgemeinen die natürliche Bewegung der Wirbelschicht zur Erzielung guter Verteilung nicht aus. Es sind daher verschiedene Maßnahmen ergriffen worden, um dieses Problem zu lösen. Die Verwendung eines Wurfbeschickers stellt erhöhte Anforderungen an die Brennstoffaufbereitung. Der Einsatz von pneumatischen Transportsystemen, die an zahlreichen Punkten Brennstoff in das Bett einführen, beschränkt sich auf trockene Brennstoffe mit geringer Korngröße. Beschickungsorgane, die den Brennstoff direkt in das Bett fördern, können nur die wandnahen Zonen versorgen, somit ist die Größe des Wirbelbetts stark limitiert.

Um die durch die Verbrennung des Brennstoffs frei werdende Energie im Wirbelbett nutzen zu können und um die emissionsmindernde Wirkung diverser Adsorbentien voll zur Geltung zu bringen, ist eine rasche Einmischung und eine gute Verteilung dieser Stoffe im Wirbelbett erforderlich. Dazu wurden schon mehrere Versuche einer, durch verschiedenste Maßnahmen bewirkten Bettmaterialzirkulation unternommen (EP-A 202215 ; DE-OS 2804073). Bei allen diesen Verfahren ist die Geschwindigkeit der Bettmaterialbewegung zu gering, um rasch entgasende Brennstoffe ausreichend über die Bettquerschnittsfläche zu verteilen. Weiters ist es dabei schwierig, Feinteile oder Teile niedrigen spezifischen Gewichtes zuverlässig in die Wirbelschicht einzumischen.

Erfindungsgemäß wird der Brennstoff ebenso wie gegebenenfalls zur Schadstoffbindung benötigte Additive (z.B. $CaCO_3$) in den Raum über der langsamen Wirbelschicht so aufgegeben, daß sie durch die Bettmaterialzirkulation in Form des Teilchenregens erfaßt und dadurch zuverlässig in die Wirbelschicht eingemischt werden. Im allgemeinen herrscht an der Stelle der Beschickungsöffnung im Inneren des Ofens leichter Unter-

4

druck, sodaß keine aufwendigen Abdichtorgane vorzusehen sind. Verstopfungen und Verschleiß zufolge ungenügender Brennstoffaufbereitung können daher weitgehend ausgeschlossen werden. Die für eine optimale Umsetzung der Brennstoffe notwendige Verteilung wird erfindungsgemäß mittels der raschen Bettmaterialzirkulation, die durch die extrem unterschiedliche Fluidisierung der beiden Bettbereiche bewirkt wird, gelöst.

Bedingt durch die gute Verteilung des Brennstoffs sowie durch die hohe Turbulenz in der Nachverbrennungszone kommt es nicht zur Bildung von Strähnen mit niedrigem $O_2$- und hohem CO-Gehalt. Bei niedriger Bauhöhe kann gleichzeitig ein niedriger Sauerstoffgehalt (4-6% $O_2$) im Rauchgas eingestellt werden, ohne daß der gute Ausbrand beeinträchtigt wird, was einen verbesserten Feuerungswirkungsgrad zur Folge hat.

Neben dem Effekt auf die Brennstoffverteilung hat die Größe der Querschnittsfläche Auswirkungen auf den Platzbedarf der Anlage und auf die Gestaltung der Einrichtungen zur Entfernung von eventuell mit dem Brennstoff eingebrachten, unbrennbaren Grobteilen aus der Wirbelschicht. Bei gegebener Feuerungsleistung läßt sich eine Querschnittsflächenminderung nur durch Erhöhung der spezifischen Leistung, was bei nichtdruckaufgeladenem Betrieb nur durch Steigerung der Fluidisierungsgeschwindigkeit erreicht werden kann, erzielen. Die hierzu bekannten Verfahren (z.B. US-PS 4538549 ; US-PS 4111158) der zirkulierenden Wirbelschicht besitzen große Bauhöhe zur Bereitstellung ausreichender Gasverweilzeiten.

Bisher bekannte Verfahren mit innerer Bettmaterialzirkulation weisen nicht nur eine wesentlich geringere Zirkulationsrate auf, sondern sie enthalten auch keinerlei Maßnahmen, um die vollständige Nachverbrennung flüchtiger Bestandteile zu gewährleisten und die dabei frei werdende Wärme wenigstens zum Teil zur Erwärmung des Wirbelbettes zu nutzen. Die DE-OS 2836531 offenbart zwar eine Umlenkeinrichtung oberhalb der schnellen Wirbelschicht, diese dient aber weder dazu, feste Partikel abzuscheiden, noch wird sie dazu genutzt einen Strömungsimpuls zur Erzeugung von Turbulenzen in einer Nachbrennkammer zu bewirken.

Erfindungsgemäß wird geringer Platzbedarf durch hohe Querschnittsleistung erzielt. Dem Nachteil großer Bauhöhe wird durch die Anordnung der Umlenkeinrichtung am oberen Ende der schnellen Zone begegnet. Diese Umlenkeinrichtung bewirkt ferner eine Auftrennung des aus der schnellen Wirbelschicht austretenden Gas-Feststoff-Gemisches in einen Rauchgasstrom und in einen im wesentlichen abwärts gerichteten Feststoffstrom.

Der Gasstrom, der im allgemeinen noch freien Sauerstoff enthält, verläßt die Umlenkeinrichtung mit hohem Strömungsimpuls etwa in horizontaler Richtung, trifft auf die aus der Brennstoffaufgabezone austretenden Pyrolysegase und vermischt sich mit diesen in einer turbulenzreichen Nachverbrennungszone. Vollständiger Ausbrand der Pyrolysegase kann daher innerhalb einer mittleren Verweilzeit von 0,1-2 sec erreicht werden.

Eine vielfach angewandte Methode zur Minderung des Stickoxidausstoßes ist die Stufung der Verbrennung. Dabei läuft die Verbrennung zunächst unter reduzierenden Bedingungen ab. In einer zweiten Stufe ist der Ausbrand in oxidierenden Verhältnissen vorgesehen. Ein wesentliches Problem bei den bekannten stationären oder intern zirkulierenden Wirbelschichtverfahren ist jedoch, vollständigen Ausbrand in angemessener Zeit innerhalb der Oxidationszone zu bewerkstelligen. Der limitierende Faktor liegt hierbei in der Durchmischung von Sauerstoffträger und unverbrannten Gasen.

Die Umsetzung von gestufter Verbrennung bei interner Bettzirkulation wird daher durch Aufgabe des Brennstoffes in den langsamen fluidisierten Bereich erzielt. Diese Möglichkeit ist z.B. aus der EP-A 202215 bekannt, dort werden aber keine Maßnahmen zur Verbesserung der Gasmischung gesetzt.

Die Brennstoffaufgabezone stellt eine Trocknungs- und Pyrolysezone dar, in der reduzierende Bedingungen vorherrschen. Der Bereich der schnellen Wirbelschicht dient als Verbrennungszone, in der oxidierende Bedingungen überwiegen. Der diese Verbrennungszone verlassende, noch freien Sauerstoff enthaltende Gasstrom, der einen Großteil der gesamten Rauchgasmenge ausmacht, wird über den Bereich oberhalb der Trocknungs- und Pyrolysezone geführt, wo der Ausbrand der aus der Reduktionszone aufsteigenden unverbrannten Gase erfolgt. Wie weiter oben beschrieben, wird durch die hohe Turbulenz in dieser Nachbrennkammer vollständige Durchmischung und somit Ausreaktion gewährleistet.

Durch Veränderung der Mengenaufteilung des Sauerstoffträgers auf die beiden Bereiche kann die Geschwindigkeit der Bettmaterialzirkulation gesteuert werden. Dadurch kann die mittlere Verweilzeit des Brennstoffs in der Pyrolysezone in weiten Grenzen (z.B. 5 s-60 s) geregelt und somit die Menge der hier freigesetzten flüchtigen Bestandteile beeinflußt werden.

Weiterhin kann auch die Verbrennung in der Turbulenzzone und damit die Temperatur in der Nachbrennkammer gesteuert werden. Zu diesem Zweck kann ein Sauerstoffträgergas knapp oberhalb der langsamen Wirbelschicht, aber noch innerhalb des Teilchenregens eingebracht werden. Die bei der solcherart eingeleiteten Verbrennung freigesetzte Wärme wird an den Teilchenregen abgegeben und somit der Wirbelschicht zugeführt. Dadurch ist es selbst bei hochflüchtigen Brennstoffen möglich, fast die ganze frei werdende Härme der Wirbelschicht zuzuführen.

Schließlich sind die Probleme, die mit der Kühlung des Wirbelbettes verbunden sind, zu erwähnen. Bei stationären Wirbelschichtanlagen sind die zur Bettkühlung verwendeten Heizflächen wechselnd oxidierender

EP 0 302 849 B1

und reduzierender Atmosphäre und mechanischem Abrieb ausgesetzt.

Als Folge ergeben sich ernsthafte Standzeitprobleme. Desweiteren kann der Wärmeübergang auf die Rohre nur in engen Grenzen verändert werden, wodurch sich Schwierigkeiten im Teillastverhalten ergeben. Diese Probleme wurden bei zirkulierenden Wirbelschichtverfeuerungen grundsätzlich durch Ausbildung der Heizflächen als Wandheizflächen gelöst. Die Heizflächen sind auf den oberen Bereich der Wirbelschicht beschränkt, wo ausschließlich oxidierende Verhältnisse vorliegen. Aus fluiddynamischen Gründen ist der abrasive Angriff des Bettmaterials auf die Heizflächen deutlich herabgesetzt. Bei diesen Wirbelschichttypen ist durch Änderung der Gasgeschwindigkeit in der Wirbelschicht eine Steuerung des Wärmeübeganges möglich.

Beim erfindungsgemäßen Verfahren ist der zweite Bereich, die Verbrennungszone, als schnelle Wirbelschicht ausgebildet. Es liegen dort somit gleiche Verhältnisse wie bei einer zirkulierenden Wirbelschicht vor, so daß die eben erwähnten Effekte zum Tragen kommen.

Gelangen Grobteile, die zum Großteil aus Inertmaterial bestehen, in die Wirbelschicht, so müssen sie wieder aus dem System entfernt werden. Beim erfindungsgemäßen Verfahren erfolgt dies durch einen am Boden befindlichen Austragsschacht. Dieser kann belüftet werden, ohne Fluidisierungsgeschwindigkeit zu erreichen. Der in den mit ca. 800°C aus der Wirbelschicht abgezogenen Grobteilen noch enthaltene Kohlenstoff wird somit umgesetzt, gleichzeitig kann das abgezogene Material auf eine Temperatur von etwa 200-600°C abgekühlt werden.

Soll der Wirbelschichtreaktor zur Pyrolyse verschiedenster Materialien betrieben werden, können die in der Pyrolysezone frei werdenden Entgasungsprodukte schon vor der Durchmischung mit den aus dem schnell fluidisierten Bereich austretenden Rauchgasen abgezogen werden. Eine bessere Umsetzung kann durch Einstellen der Zirkulationsrate ebenso wie durch die Aufgabe von Dampf, Kohlendioxid oder anderen, die Vergasung begünstigenden Medien anstelle von Luft zur Fluidisierung des langsamen Teiles erzielt werden.

Das erfindungsgemäße Verfahren wird im folgenden unter Bezugnahme auf die Zeichnung näher beschrieben, die ein Beispiel einer Vorrichtung zur Durchführung dieses Verfahrens zeigt, die ebenfalls Erfindungsgegenstand ist und im wesentlichen folgende Bauteile umfaßt :

einen Wirbelschichtreaktor mit einer Verbrennungskammer und einer Nachverbrennungskammer, wobei die genannte Verbrennungskammer in eine weniger fluidisierte Brennstoffzufuhrzone und eine stärker fluidisierte Verbrennungszone geteilt ist ;

eine aufrechtstehende Trennwand, die zwischen den genannten Zonen positioniert ist und einen Durchlaß zwischen der genannten Brennstoffzufuhrzone und der genannten Verbrennungszone bildet, um zuzulassen, daß Feststoffe von der genannten Brennstoffzufuhrzone in die genannte Verbrennungszone geführt werden, wobei die genannte Trennwand eine Höhe aufweist, die sich über die genannte Brennstoffzufuhr hinaus erstreckt ;

eine erste Umlenkeinrichtung, die am oberen Ende der genannten Verbrennungszone vorgesehen ist, um aufsteigende Feststoffe in der genannten Verbrennungszone so umzulenken, daß sie als Teilchenregen in die genannte Brennstoffzufuhrzone fallen ; und

eine Brennstoffzufuhreinrichtung, die sich in die genannte Brennstoffzufuhrzone hinein für das direkte Eindosieren von Brennstoff in den genannten Teilchenregen hinein erstreckt, wobei die genannte Umlenkeinrichtung in der genannten Brennstoffzufuhrzone turbulent Verbrennungsgase in den unteren Teil der genannten Nachverbrennungskammer umlenkt, in deren unterem Abschnitt turbulenzerzeugende Prallplatten angeordnet sind.

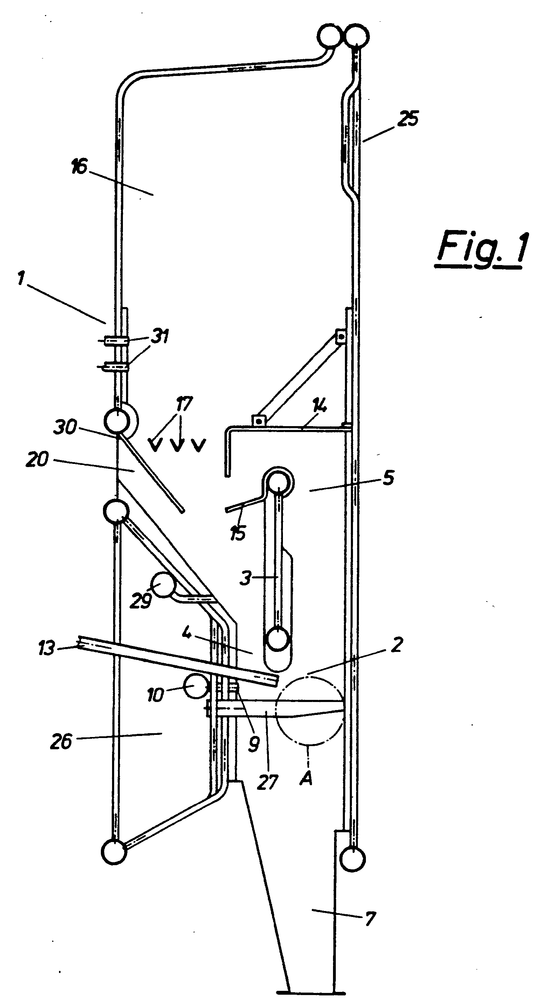

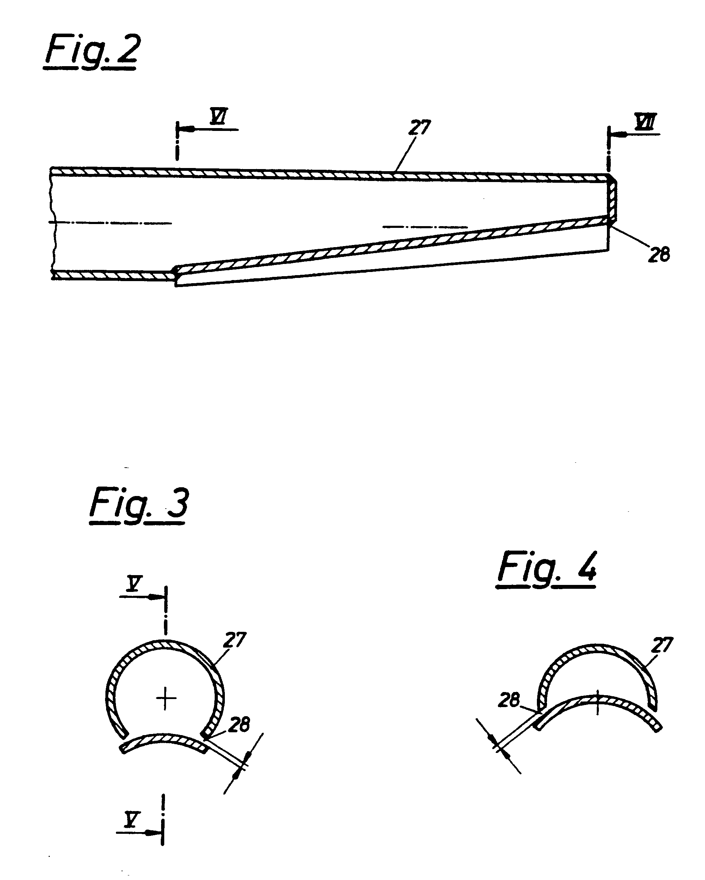

Es zeigen : Fig. 1 einen erfindungsgemäßen Fließbettreaktor im Querschnitt und die Fig. 2 bis 4 vergrößerte Details aus Fig. 1.

In Fig. 1 bezeichnet 1 einen Fließbettreaktor mit einer Brennkammer 2 im unteren Teil des Reaktors 1, die durch eine Trennwand 3 in einen ersten Bereich 4 und einen zweiten Bereich 5 unterteilt ist. Die Trennwand 3 ist vorzugsweise als Wärmetauscher ausgebildet, wobei die dem zweiten Bereich 5 zugewandte Seite der Trennwand mit feuerfestem Material verkleidet ist, während im ersten Bereich 4 sowohl Trennwand 3 als auch Brennkammerwand nur im unteren Teil verkleidet sind. Oberhalb der Trennwand 3 ist an der Wandung der Brennkammer 2 eine nach unten gerichtete Umlenkplatte 14 befestigt, die, gemeinsam mit einer darunter an der Trennwand 3 angeordneten Prallplatte 15, als Prallabscheider dient, wie später erläutert wird. An Umlenkplatte 14 und Prallplatte 15 können auswechselbare Verschleißplatten befestigt sein. Die Brennkammer 2 setzt sich nach oben als Nachbrennkammer 16 fort, in der V-förmige Turbulatoren 17 vorgesehen sind, die wahlweise auch als Wärmetauscher ausgebildet sein können. Am Ausgang der Nachbrennkammer können Wärmetauschereinbauten angebracht sein. Die Wandung der Brennkammer 2 und der Nachbrennkammer 16 ist vorzugsweise als Flossenwand ausgebildet, d.h. gekühlt, wobei die Nachbrennkammer 16 unter Umständen auch ungekühlt betrieben werden kann. Zur Einbringung von festen Brennstoffen dient eine Rutsche 20, die zum ersten Bereich 4 führt.

Im Betrieb des Reaktors 1 wird der erste Bereich 4 so fluidisiert, daß sich eine stationäre langsame Wir-

6

belschicht ausbildet, während der zweite Bereich 5 so fluidisiert wird, daß sich eine schnelle Wirbelschicht ausbildet. Das Bettmaterial fließt vom ersten Bereich 4 unterhalb der Trennwand zum zweiten Bereich 5, wird dort hochgehoben und über den Spalt zwischen der Trennwand 3 und der Umlenkplatte 14 in den ersten Bereich 4 zurückgeführt.

Der hohe seitliche Impuls der Transportluft führt nach der Umlenkplatte 14 und der Prallplatte 15 in der Nachbrennkammer 16 zu erhöter Turbulenz über der langsamen Wirbelschicht im Bereich 4. Das abgeschiedene Bettmaterial führt zu einem Teilchenregen über der langsamen Wirbelschicht im Bereich 4. Da der abzuarbeitende Stoff über eine Rutsche 20 in dem Raum über der dichten, langsamen Wirbelschicht zugeführt wird, so kann er durch den Teilchenregen zugeschüttet werden und leichter in die dichte, langsame Wirbelschicht eintauchen. Charakteristische Größen für das Verfahren bzw. den Betrieb des Reaktors 1 sind die Flächenverhältnisse der Querschnittsflächen der ersten und zweiten Bereiche 4 und 5 sowie der Fluidisierungsgeschwindigkeiten in diesen Bereichen. Durch den besonderen Aufbau der Brennkammer 2 können Trocknungs-, Pyrolyse- und Verbrennungszone getrennt werden.

Die Abgase aus der Nachverbrennungsturbulenzzone 16 werden, gegebenenfalls nach Passieren von Wärmetauschern bei 25 aus dem Reaktor 1 abgezogen, wobei in üblicher Weise Staubfilter vorgesehen sein können.

Die Belüftung des ersten, langsamen Bereiches 4 erfolgt über eine Speiseleitung 10 und Rohre 9, die direkt ins Reaktorinnere münden und einen Freistrahl erzeugen, der unterhalb der Trennwand 3 in Richtung des schnellen Bereichs 5 geht. Die Rohre 9 sind gerade und stumpf abgeschnitten oder mit einem Siphonknie versehen, um einen Rückfluß von Bettmaterial in die Rohre 9 bzw. deren Speiseleitung 10 zu verhindern.

Weiterhin erfolgt die Fluidisierung des schnellen Bereichs 5 über eine seitliche Luftkammer 26, die mit einem horizontalen Rohrrost aus Rohren 27 in Verbindung steht, die sich von unterhalb des langsamen Bereichs 4 im Abstand unter der Trennwand 3 in den schnellen Bereich 5 hinein erstrecken und unterhalb des Bereiches 5 — dies ist in Fig. 1 der Bereich A und in den Fig. 2 bis 4 im Detail dargestellt — beidseitig schräge Luftauslaßschlitze 28 aufweisen, die seitlich abwärts in Richtung Aschetrichter 7 gerichtete Luftvorhänge abgeben.

Weiterhin ist eine Brennstoffzuführung 13, die insbesondere zur Zufuhr von gasförmigen, flüssigen oder pastösen Brennstoffen dient und die bei autothermen Prozessen nur zum Anfahren des Reaktors gespeist wird, als Lanze ausgebildet, deren Abgabeöffnung unterhalb der Trennwand 3 liegt.

Im unteren Bereich der Rutsche 20 ist oberhalb der langsamen Wirbelschicht eine Zuführung 29 für ein Sauerstoffträgergas (z.B. Sekundärluft) vorgesehen und deren obere Wand als derartige Zuführung 30 ausgebildet. Zuführung 29 und Zuführung 30 können auch alternativ vorgesehen sein. Oberhalb der Turbulatoren 17 ist in der Seitenwand des Reaktors 1 ein Düsensatz 31 vorgesehen, über den gegebenenfalls weiterhin Sauerstoffträgergas (Tertiärluft) zur Unterstützung der Nachverbrennung und zur NOx-Minimierung in der Nachverbrennungsturbulenzzone 16 eindüsbar ist.

Der Reaktor nach Fig. 1 kann in Form einer Rücken-an-Rücken-Konstruktion spiegelbildlich verdoppelt werden, in der die den Gasauslaß 25 tragende Hand dann die Mittelwand und Symmetrieebene darstellt. Die Gasauslässe 25 werden dann in einer anderen Seitenwand vorgesehen ; es ist auch möglich, eine gemeinsame Nachverbrennungsturbulenzzone 16 vorzusehen.

Der langsame Bereich 4 des Reaktors 1, d.h. die Trocknungs- und Pyrolysezone, wird vorteilhaft mit Geschwindigkeiten im Bereich von etwa 0,2 bis etwa 1,0 m sec$^{-1}$ gefahren ; die Geschwindigkeiten im schnellen Bereich 5 des Reaktors, d.h. in der Verbrennungszone, liegen in Abhängigkeit von der Belastung vorteilhaft im Bereich von etwa 2,0 bis etwa 12,0 m sec$^{-1}$. Ein weiterer bestimmender Parameter des erfindungsgemäßen Verfahrens ist der Bettmaterialumlauf, der, wie bereits ausgeführt, vorteilhaft im Bereich von etwa 20 bis etwa 200 kg m$^{-2}$ sec$^{-1}$, bezogen auf die Querschnittsfläche des schnellen Bereichs 5, liegt, und besonders bevorzugt bei 50 bis 70 kg m$^{-2}$ sec$^{-1}$ gewählt wird.

Es liegt auf der Hand, daß die verschiedenen Parameter miteinander verknüpft sind und u.a. auf die speziellen Brennstoffe, mit denen der Reaktor 1 gefahren wird, abgestellt werden müssen.

Vorteilhaft ist eine Führung für die schnelle Verbrennungszone vorgesehen, deren Höhe das 2- bis 20-fache der Höhe der Bettmaterialrücklaufzone beträgt.

Ein weiteres Kennzeichen eines erfindungsgemäßen Reaktors ist, daß das Querschnittsverhältnis von Verbrennungszone zu Bettmaterialrücklaufzone im Bereich von etwa 1 : 1 bis etwa 5 : 1 liegt.

Das Querschnittsverhältnis wird üblicherweise am unteren Ende der Trennwand 3 gemessen.

Seitens der Anmelderin wurden Pilotversuche in einer Anlage, die etwa Fig. 4 entspricht, mit Trennwänden zwischen Verbrennungszone und Trocknungs- und Pyrolysezone mit einer Höhe von 1,7 bis 2,0 m durchgeführt ; die Anlage hatte in der Nachverbrennungszone 16 einen freien Querschnitt von 0,48 m$^2$ und eine Gesamtbauhöhe von 6 m. Der Querschnitt der schnellen Zone 5 betrug 0,13 m$^3$, der Querschnitt der langsamen Zone 4 0,1 m$^2$. Die Anlage wurde mit 200 kg Bettmaterial gefahren.

Im folgenden werden einige dabei erzielte Ergebnisse in Tabellenform angeführt.

| Brennstoff | Menge | Verbrennungsluft | | | WS - Temp. | Emissionen | | |
| | | langs. Ber | schneller Ber | Oberbettluft | | CO | NO$_x$ | O$_2$ |
| | (kg/h) | (Nm³/h) | (Nm³/h) | (Nm³/h) | (°C) | (mg/Nm³)* | | (%) |
| Hausmüll | 190 | 30 | 700 | 60 | 820 | 35 | 215 | 5.8 |
| Rejekte ** | 270 | 30 | 700 | 90 | 780 | 40 | 190 | 6.1 |
| Holz | 170 | 30 | 700 | . | 840 | 35 | 220 | 5.4 |
| Braunkohle | 200 | 30 | 700 | . | 850 | 35 | 170 | 5.5 |

* bez. auf 11% O$_2$

** Aus der Papierindustrie, die im wesentlichen aus Kunststoffabfällen
+ Zellulosefasern bestehen.

## Wärmefreisetzung in %

| Brennstoff | Bereich 4 | Bereich 5 | Nachbr.-kammer 16 |
| --- | --- | --- | --- |
| Braunkohle | 13 - 20 | 60 - 70 | 17 - 22 |
| Holz | 10 - 15 | 50 - 60 | 27 - 35 |
| BRAM² | 8 - 15 | 45 - 55 | 35 - 40 |
| Rejekte | 11 - 17 | 50 - 60 | 23 - 29 |
| Klärschlamm | 13 - 18 | 60 - 65 | 20 - 25 |

² Nicht pelletierter Brennstoff aus Hausmüll

Das erfindungsgemäße Verfahren wird in bekannter Weise so angefahren, daß der Reaktor mit üblichem Bettmaterial, z.B. Quarzsand, beschickt und mit üblichem Sekundärbrennstoff die Gas oder Öl auf Temperatur gebracht wird. Erst dann wird der eigentliche Brennstoff zudosiert, wobei Schwankungen in dessen Wärmeinhalt durch Regelung der Wärmetauscher und/oder temporäres Zudosieren von Sekundärbrennstoff aufgefangen werden.

## Patentansprüche

1. Wirbelschichtverfahren zur Vergasung und Verbrennung von Brennstoffen in getrennten und unterschiedlich fluidisierten Zonen, umfassend :

Aufgehen des Brennstoffs in eine Trocknungs- und Pyrolysezone mit verhältnismäßig schwächerer Fluidisierung, in der die Feststoffe nach unten transportiert werden ;

Fördern der genannten Feststoffe von einem unteren Bereich der genannten Trocknungs- und Pyrolysezone zu einem unteren Bereich einer Verbrennungszone mit verhältnismäßig stärkerer Fluidisierung, in der die Feststoffe nach oben Transportiert werden ;

Betreiben der Verbrennungszone als schnelle oder turbulente Wirbelschicht ;

Fördern der genannten Feststoffe nach oben in der genannten Verbrennungszone über die Höhe eines Bettes in der genannten Trocknungs- und Pyrolysezone hinaus ;

Umwälzen und Zwangsumlenken der genannten Feststoffe vom oberen Bereich der genannten verbrennungszone nach unten auf das genannte Bett in der genannten Trocknungs- und Pyrolysgzone zu als Regen von Feststoffteilchen ;

direktes Eindosieren des Brennstoffs in den genannten Teilchenregen ;

Leiten von Gasen, die aus der genannten Verbrennungszone austreten, als Strömungsimpuls in eine Turbulenzzone, in der eine Nachverbrennung durchgeführt wird ; und

Einstellen der Temperatur in der genannten Nachverbrennungs-Turbulenzzone durch Steuerung der Verteilung der gesamten Menge an Fluidisierungsgas über die genannte Verhrennungszone und die genannte Trocknungs- und Pyrolysezone.

2. Verfahren nach Anspruch 1, weiters umfassend :

Abziehen der Gase, die aus der genannten Trocknungs- und Pyrolysezone austreten, vor ihrer Mischung mit den aus der genannten Verbrennungszoneaustretenden Gasen.

3. Verfahren nach Anspruch 1, worin der genannte Betriebsschnitt den Betrieb der genannten Wirbelschicht in der genannten Verbrennungszone mit einer Fluidisierungszahl von 70 bis 140 umfaßt.

4. Verfahren nach Anspruch 1, worin der genannte zweite Beförderungsschritt das Befördern der genannten Feststoffe nach oben in einer Höhe des Zwei- bis Zwanzigfachen der Höhe des genannten Bettes in der genannten Trocknungs- und Pyrolysezone umfaßt.

5. Verfahren nach Anspruch 1, worin der genannte Zwangsumlenkungsschritt weiter die Umlenkung der genannten Feststoffe verhältnismäßig horizontal über das genannte Bett umfaßt.

6. Wirbelschichtverfahren zur Vergasung und Verbrennung von Brennstoffen in getrennten und unterschiedlich fluidisierten Zonen, umfassend :

Aufgeben des Brennstoffs in eine Trocknungs- und Pyrolysezone mit verhältnismäßig schwächerer Fluidisierung, in der die Feststoffe nach unten transportiert werden ;

Fördern der genannten Feststoffe von einem unteren Bereich der genannten Trocknungs- und Pyrolysezone in einen unteren Bereich einer Verbrennungszone mit verhältnismäßig stärkerer Fluidisierung, in der die Feststoffe nach oben transportiert werden ;

Betreiben der genannten Verbrennungszone als schnelle oder turbulente Wirbelschicht ;

Fördern der genannten Feststoffe nach oben in der genannten Verbrennungszone über die Höhe eines Bettes in der genannten Trocknungs- und Pyrolysezone hinaus ;

Umwälzen und Zwangsumlenken der genannten Feststoffe vom oberen Bereich der genannten Verbrennungszone nach unten auf das genannte Bett in der genannten Trocknungs- und Pyrolysezone zu als Regen von Feststoffeilchen ;

direktes Eindosieren des Brennstoffs in den genannten Teilchenregen ;

Einleiten von Gasen, die aus der genannten verbrennungszone austreten, als Strömungsimpuls in eine Turbulenzzone, in der eine Nachverbrennung durchgeführt wird ; und

Steuern der Temperatur in der genannten Nachverbrennungszone durch Zugabe eines Sauerstoffträgergases im Bereich des Teilchenregens.

7. Verfahren nach Anspruch 6, weiters umfassend :

Abziehen der Gase, die aus der genannten Trocknungs- und Pyrolysezone austreten, vor ihrer Mischung mit den aus der genannten Verbrennungszone austretenden Gasen.

8. Verfahren nach Anspruch 6, worin der genannte Betriebschritt den Betrieb der genannten Wirbelschicht in der genannten Verbrennungszone mit einer Fluidisierungszahl von 70 his 140 umfaßt.

9. Verfahren nach Anspruch 6, worin der genannte zweite Förderschritt das Fördern der genannten Feststoffe nach oben mit dem Zwei- bis Zwanzigfachen der Höhe des genannten Bettes in der genannten Trocknungs- und Pyrolysezone umfaßt.

10. Verfahren nach Anspruch 6, worin der genannte Zwangsumlenkungsschritt weiter das Umlenken der genannten Feststoffe verhältnismäßig horizontal über das genannte Bett umfaßt.

11. Vorrichtung zur Durchführung eines Wirbelschichtverfahrens, umfassend :

einen Wirbelschichtreaktor mit einer Verbrennungskammer und einer Nachverbrennungskammer, wobei die genannte Verbrennungskammer in eine weniger fluidisierte Brennstoffzufuhrzone und eine stärker fluidisierte Verbrennungszone geteilt ist ;

eine aufrechtstehende Trennwand, die zwischen den genannten Zonen positioniert ist und einen Durchlaß zwischen der genannten Brennstoffzufuhrzone und der genannten Verbrennungszone bildet, um zuzulassen, daß Feststoffe von der Brennstoffzufuhrzone in die genannte Verbrennungszone geführt werden, wobei die genannte Trennwand eine Höhe aufweist, die sich über die genannte Brennstoffzufuhr hinaus erstreckt ;

eine Umlenkeinrichtung, die am oberen Ende der genannten Verbrennungszone vorgesehen ist, um aufsteigende Feststoffe in der genannten Verbrennungszone so umzulenken, daß sie als Teilchenregen in die genannte Brennstoffzufuhrzone fallen ; und

eine Brennstoffzufuhreinrichtung, die sich in die genannte Brennstoffzufuhrzone hinein für das direkte Eindosieren von Brennstoff in den genannten Teilchenregen hinein erstreckt, wobei die genannte Umlenkeinrichtung in der genannten Brennstoffzufuhrzone turbulent Verbrennungsgase in den unteren Teil der genannten Nachverbrennungskammer umlenkt, in deren unterem Abschnitt turbulenzerzeugende Prallplatten angeordnet sind.

**Claims**

1. A fluidized bed process for gasification and combustion of fuel in separate and differently fluidized zones, comprising :
charging the fuel into a drying and pyrolysis zone having relatively lower fluidization with solids being transported downwardly ;
conveying said solids from a lower area of said drying and pyrolysis zone to a lower area of a combustion zone having relatively higher fluidization with solids being transported upwardly ;
operating the combustion zone as a fast or turbulent fluidized bed ;
conveying said solids upwardly in said combustion zone beyond the height of a bed in said drying and pyrolysis zone ;
recirculating and forcibly deflecting said solids from the upper area of said combustion zone downwardly toward said bed in said drying and pyrolysis zone as a shower of solid particles ;
directly metering the fuel into said shower of particles ;
passing gases emerging from said combustion zone as a flowing pulse into a turbulence zone in which post-combustion is carried out ; and
adjusting the temperature in said post-combustion turbulence zone by controlling distribution of the total amount of fluidization gas over said combustion zone and said drying and pyrolysis zone.

2. A process according to claim 1, further comprising :
withdrawing gases emerging from said drying and pyrolysis zone prior to their mixing with gases emerging from said combustion zone.

3. A process according to claim 1, wherein said operating step comprises operating said fluidized bed in said combustion zone with a fluidization number of from 70 to 140.

4. A process according to claim 1, wherein said second conveying step comprises conveying said solids upwardly from two to twenty times the height of said bed in said drying and pyrolysis zone.

5. A process according to claim 1, wherein said forcible deflecting step further comprises deflecting said solids relatively horizontally over said bed.

6. A fluidized bed process for gasification and combustion of fuel in separate and differently fluidized bed zones, comprising :
charging the fuel into a drying and pyrolysis zone having relatively lower fluidization with solids being transported downwardly ;
conveying said solids from a lower area of said drying and pyrolysis zone to a lower area of a combustion zone having relatively higher fluidization with solids being transported upwardly ;
operating said combustion zone as a fast or turbulent fluidized bed ;
conveying said solids upwardly in said combustion zone beyond the height of a bed in said drying and pyrolysis zone ;
recirculating and forcibly deflecting said solids from the upper area of said combustion zone downwardly toward said bed in said drying and pyrolysis zone as a shower of solid particles ;
directly metering the fuel into said shower of particles ;
passing gases emerging from said combustion zone as a flowing pulse into a turbulence zone in which post-combustion is carried out ; and
controlling the temperature in said post-combustion turbulence zone by adding an oxygen carrier gas in the area of said shower of particles.

7. A process according to claim 6, further comprising :
withdrawing the gases emerging from said drying and pyrolysis zone prior to their mixing with gases emerging from said combustion zone.

8. A process according to claim 6, wherein said operating step comprises operating said fluidized bed in said combustion zone with a fluidizationnumber of from 70 to 140.

9. A process according to claim 6, wherein said second conveying step comprises conveying said solids upwardly from two to twenty times the height of said bed in said drying and pyrolysis zone.

10. A process according to claim 6, wherein said forcible deflecting step further comprises deflecting said solids relatively horizontally over said bed.

11. An apparatus for carrying out a fluidized bed process, comprising :
a fluidized bed reactor having a combustion chamber and a post-combustion chamber, said combustion chamber being divided into a less fluidized fuel feed zone and a more fluidized combustion zone ;

an upright partition positioned between said zones and forming a passage between said fuel feed zone and said combustion zone to allow solids to pass from said fuel feed zone to said combustion zone, said partition having a height extending above said fuel feed zone ;

deflector means provided at the upper end of said combustion zone for deflecting rising solids in said combustion zone so that they will drop into said fuel feed zone as a shower of particles ; and

fuel feed means extending into said fuel feed zone for directly metering fuel into said shower, said deflector means in said fuel feed zone turbulently deflecting combustion gases into the lower part of said post-combustion chamber, turbulence-generating baffle plates being located in the lower part of said post-combustion chamber.

## Revendications

1. Procédé à lit fluidisé pour la gazéification et la combustion des combustibles dans des zones séparées et différemment fluidisées, comportant :

charger le combustible dans une zone de séchage et de pyrolyse de fluidisation relativement plus faible dans laquelle les matières solides sont transportées vers le bas ;

convoyer lesdites matières solides d'un domaine inférieur de ladite zone de séchage et de pyrolyse vers un domaine inférieur d'une zone de combustion de fluidisation relativement plus forte dans laquelle les matières solides sont transportées vers le haut ;

opérer la zone de combustion comme lit fluidisé rapide ou turbulent ;

convoyer lesdites matières solides vers le haut dans ladite zone de combustion au-delà de la hauteur d'un lit dans ladite zone de séchage et de pyrolyse ;

faire circuler et défléchir forcément lesdites matières solides du domaine supérieur de ladite zone de combustion vers le bas sur ledit lit dans ladite zone de séchage et de pyrolyse sous forme d'une pluie de particules de matières solides ;

doser directement le combustible dans ladite pluie de particules de matières solides ;

conduire les gaz émergeant de ladite zone de combustion comme impulsion de courant dans une zone de turbulence dans laquelle une postcombustion est effectuée ; et

ajuster la température dans ladite zone turbulente de postcombustion par contrôle de la distribution du débit total de gaz de fluidisation sur ladite zone de combustion et ladite zone de séchage et de pyrolyse.

2. Procédé selon la revendication 1, comportant en outre :

retirer les gaz émergeant de ladite zone de séchage et de pyrolyse avant leur mélange avec les gaz émergeant de ladite zone de combustion.

3. Procédé selon la revendication 1, dans lequel ladite étape d'opération comporte l'opération du lit fluidisé dans ladite zone de combustion à un nombre de fluidisation de 70 à 140.

4. Procédé selon la revendication 1, dans lequel ladite deuxième étape de transport comporte le transport desdites matières solides vers le haut à une hauteur de deux à vingt fois la hauteur dudit lit dans ladite zone de séchage et de pyrolyse.

5. Procédé selon la revendication 1, dans lequel ladite étape de déflexion forcée comporte en outre la déflexion desdites matières solides relativement horizontalement au-dessus dudit lit.

6. Procédé à lit fluidisé pour la gazéification et la combustion des combustibles dans des zones séparées et différemment fluidisées, comportant :

charger le combustible dans une zone de séchage et de pyrolyse à fluidisation relativement plus faible dans laquelle les matières solides sont convoyées vers le bas ;

convoyer lesdites matières solides d'un domaine inférieur de ladite zone de séchage et de pyrolyse vers un domaine inférieur d'une zone de combustion à fluidisation relativement plus forte dans laquelle les matières solides sont transportées vers le haut ;

opérer ladite zone de combustion comme lit fluidisé rapide ou turbulent ;

convoyer lesdites matières solides vers le haut dans ladite zone de combustion au-delà la hauteur d'un lit dans ladite zone de séchage et de pyrolyse ;

faire circuler et défléchir forcément lesdites matières solides du domaine supérieur de ladite zone de combustion vers le bas sur ledit lit dans ladite zone de séchage et de pyrolyse sous forme d'une pluie de particules de matière solide ;

doser directement le combustible dans ladite pluie de particules de matière solide ;

introduire les gaz émergeant de ladite zone de combustion comme impulsion de courant dans une zone de turbulence dans laquelle une postcombustion est effectuée ; et

contrôler la température dans ladite zone de postcombustion par addition d'un gaz porteur d'oxygène.

7. Procédé selon la revendication 6, comportant en outre :

retirer les gaz émergeant de ladite zone de séchage et de pyrolyse avant leur mélange avec les gas émergeant de ladite zone de pyrolyse.

8. Procédé selon la revendication 6, dans lequel ladite étape d'opération comporte l'opération dudit lit fluidisé dans ladite zone de combustion à un nombre de fluidisation de 70 à 140.

9. Procédé selon la revendication 6, dans lequel ladite deuxième étape de transport comporte le transport desdites matières solides vers le haut à une hauteur de deux à vingt fois la hauteur dudit lit dans ladite zone de séchage et de pyrolyse.

10. Procédé selon la revendication 6, dans lequel ladite étape de déflexion forcée comporte en outre la déflexion desdites matières solides relativement horizontalement au-dessus dudit lit.

11. Dispositif pour la mise en oeuvre d'un procédé à lit fluidisé, comportant :

un réacteur à combustible fluidisé avec une chambre de combustion et une chambre de postcombustion, ladite chambre de combustion étant divisée en une zone d'alimentation en combustible moins fluidisée et une zone de combustion plus fortement fluidisée ; une cloison étant debout et placée entre lesdites zones et formant un passage entre ladite zone d'alimentation en combustible et ladite zone de combustion pour permettre le guidage des matières solides de ladite zone d'alimentation en combustible vers ladite zone de combustion, la hauteur de ladite cloison s'étendant au-delà de ladite zone d'alimentation en combustible ;

un dispositif de déflexion prévu à l'extrémité supérieure de ladite zone de combustion pour défléchir les matières solides montant dans ladite zone de combustion au but de les faire tomber dans la zone d'alimentation en combustible sous forme d'une pluie de particules de matières solides ; et

un dispositif d'alimentation en combustible s'étendant dans ladite zone d'alimentation en combustible pour le dosage direct de combustible dans ladite pluie de particules de matières solides, ledit dispositif de déflexion défléchissant, dans la zone d'alimentation en combustible, de manière turbulente des gaz de combustion vers la partie inférieure de ladite zone de postcombustion dont la partie inférieure est pourvue de plaques de déviation (chicanes) produisant des turbulences.

Fig. 1

## Fig. 2

## Fig. 3

## Fig. 4